# EUROPEAN PATENT APPLICATION

(11) **EP 2 243 667 A2**
(43) Date of publication of application: **27.10.2010**
(21) Application number: 10002611.1
(22) Date of filing: 12.03.2010
(51) Int. Cl.: B60R 15/00

(54) **Reservoir for liquids**

(30) Priority: 18.03.2009 IT GE20090014
(71) Applicant: Nuova Rade S.P.A., 16015 Casella (GE) (IT)
(72) Inventor: Covi, Flavio Emilio, 44100 Ferrara (IT); Repetto, Stefano, 16032 Camogli (GE) (IT)
(74) Representative: Sergio, Stefano

(57) **Abstract**

Reservoir for liquids comprising a box-shaped body (2) fitted with a zone or seating (3) of the body suitable to house a pump for the suction of the liquid contained on the inside of it and suction pipes (4) suitable to be connected with the pump arranged in proximity of said seating. Means of fastening are envisaged to fasten the pump to the reservoir on the above mentioned seating.

## Description

The subject of this invention is a reservoir for liquids, for instance waste liquids, in a pleasure vessel.

Such types of reservoir are normally fitted with a series of plugs, holes for the housing of sensors and orifices for connection of suction piping to which suitable pumps are connected. Normally, the pumps are simply rested on the reservoir and thereby kept in position or, alternatively, they are positioned in spaces adjacent to the reservoir. In both cases, inconveniences may occur in the connections (leaks, partial detachments or blockages) between the pump and the reservoir due to the lack of a firm bond between them.

This invention proposes to overcome the aforesaid inconveniences by creating a reservoir for liquids in which, on the external surface of the reservoir, a seating is envisaged for the positioning of a pump fitted with suitable means to fix the pump to the reservoir. These fixing means include a plurality of eyelets arranged along parallel rows in such way as to make it possible to hook, for instance by means of straps, pumps of different dimensions on the seating. The subject of this invention is a reservoir for liquids having the characteristics of the attached claim 1.

The characteristics of the reservoir in this invention will be evidenced in detail in the following description of one of its forms of construction made with the help of the attached figures which respectively illustrate:

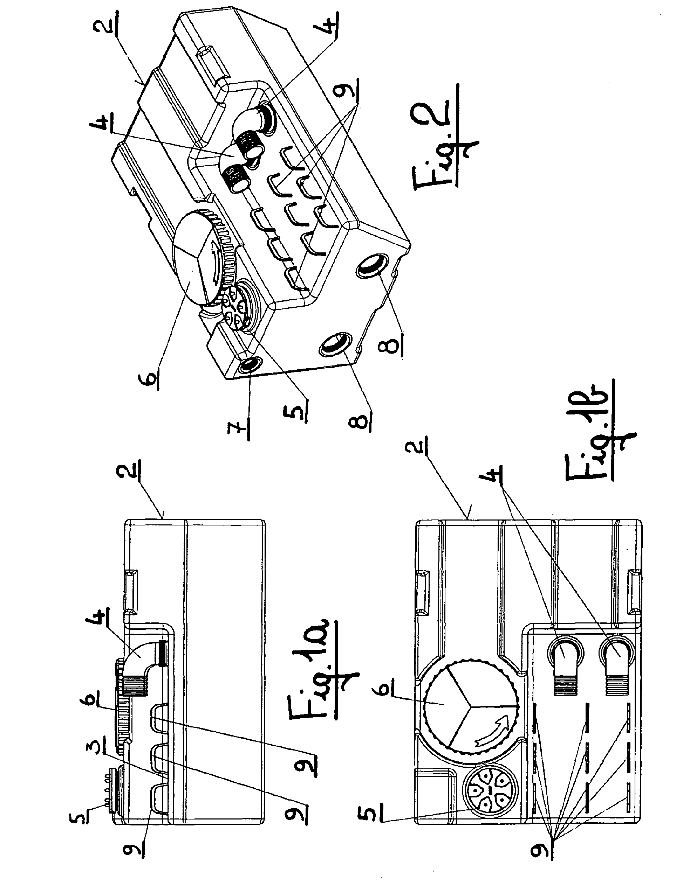

- figure 1a a frontal schematic view of the reservoir subject of this invention;
- figure 1b a schematic view from above of the reservoir subject of this invention;
- figure 2 a perspective view of the reservoir subject of this invention;

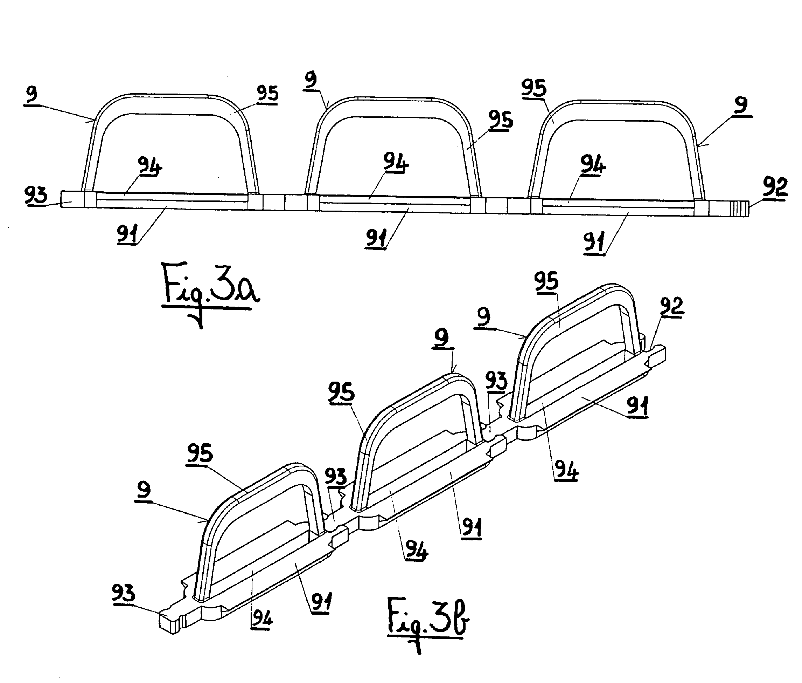

- figure 3 a a frontal view of a row of eyelets according to this invention;
- figure 3b a perspective view of a row of eyelets according to this invention. The reservoir, according to this invention, includes a box-shaped body 2 fitted with a zone or seating 3, preferably created on the upper surface of the body, suitable to house a pump for suction of the liquid contained inside of it.

Furthermore, the reservoir includes, suction pipes 4 suitable to be connected with the pump and arranged in proximity of this seating, a housing 5 for any possible sensors, for instance of level or temperature, at least one inspection hole 6 and a blowhole 7.

Advantageously, the reservoir also includes a plurality of blind sleeves 8, created during the press-forging phase of the reservoir and internally threaded, which may be opened or not by the user only in the installation phase of the reservoir itself. In such way, the reservoir is supplied to the user without premade openings, which, despite being sealed by covers, might cause leaks of liquids.

According to this invention, the reservoir includes means of fixing, created on the above mentioned zone, to fix the pump to the reservoir. These fastening means include a plurality of eyelets 9 arranged along rows parallel to one another, in such way as to make it possible to hook onto the seating, for instance by means of straps, pumps of different sizes from one another.

Each eyelet includes a base 91 fitted on the opposing extremity with a groove 92 and a protuberance 93 complementary to one another in such way as to be able to fasten one eyelet to another to create a row of them. Furthermore, the above mentioned base includes a central slot 94 from the extremities of which a small bridge 95 extends. All of the eyelets are inserted inside the reservoir duration the reservoir creation phase, in such way as to be integrated with it. At the time of installation of the pump on the seating, the small bridges, which do not interact with the straps, may be advantageously removed.

The reservoir for liquids subject of this invention may also be used as a reservoir for the collection of drinking water.

## Claims

1. Reservoir for liquids including a box-shaped body (2) provided with a zone or seating (3) of the body suitable for housing a pump for the suction of the liquid inside it, pipes (4) for the suction usuful to be connected with the pump and arranged near said seating,
**characterized by** that it includes constraint means realized on the mentioned zone for fixing the pump to the reservoir.

2. Reservoir according to claim 1, wherein said constraint means include a plurality of eyelets (9) arranged along parallel rows in order to make possible to hook pumps of different sizes on the seating.

3. Reservoir according to claim 2, wherein the pump is hooked to said eyelets by means of straps or chains or like.

4. Reservoir according to claim 3, wherein each eyelet includes a base (91) fitted on the opposing extremity with a groove (92) and a protuberance (93), complementary to one another, for constraining an eyelet to another in order to create a row of them and includes a central slot (94) from the extremity of which a small bridge (95) extends.

5. Reservoir according to claim 4, wherein at the moment of the installation of the pump on the seating, the small bridges which do not interact with the straps or chains may be removed.

6. Reservoir according to claim 1, also including a plurality of blind sleeves (8), realized during the press-forging phase of the reservoir and internally threaded, which may be opened or not by the user only during the installation phase of the reservoir itself.

7. Reservoir according to claim 1, wherein said seating is realized on the upper surface of the box-shaped body (2).
